# DEMANDE DE BREVET EUROPEEN

(11) **EP 1 884 451 A1**
(43) Date de publication de la demande: **06.02.2008**
(21) Numéro de dépôt: 07290903.9
(22) Date de dépôt: 19.07.2007
(51) Int. Cl.: B62D 25/08, B60K 11/04, B62D 65/02, B62D 29/00

(54) **Face avant pour véhicule automobile et véhicule automobile correspondant**

(30) Priorité: 26.07.2006 FR 0606855
(71) Demandeur: Faurecia Bloc Avant, 92000 Nanterre (FR)
(72) Inventeur: Rivière, Caroline, 25700 Valentigney (FR); Berne, Sébastien, 70400 Luze (FR)
(74) Mandataire: Domenego, Bertrand

(57) **Abrégé**

Cette face avant, destinée à supporter un radiateur et/ou un groupe motoventilateur, est du type comprenant deux montants (6) possédant chacun une extrémité supérieure (10) et définissant entre eux un espace (8) de réception d'un radiateur et/ou d'un groupe motoventilateur, et une première traverse supérieure (14) distincte et séparée des montants (6), la première traverse (14) reliant les extrémités supérieures (10) des montants (6) et possédant des portions d'extrémité (20) s'étendant latéralement vers l'extérieur à partir des montants (6).
Selon un aspect de l'invention, elle comprend une deuxième traverse supérieure (16) distincte et séparée des montants (6) et de la première traverse (14), la deuxième traverse (16) étant plus courte que la première traverse (14) et possédant des extrémités (24) fixées sur les extrémités supérieures (10) des montants (6).

## Description

La présente invention concerne une face avant pour véhicule automobile destinée à supporter un radiateur et/ou un groupe motoventilateur, du type comprenant deux montants possédant chacun une extrémité supérieure et définissant entre eux un espace de réception d'un radiateur et/ou d'un groupe motoventilateur, et une première traverse supérieure distincte et séparée des montants, la première traverse reliant les extrémités supérieures des montants et possédant des portions d'extrémité s'étendant latéralement vers l'extérieur à partir des montants.

La structure et les dimensions d'une telle face avant sont adaptées à un type de véhicule donné, notamment en fonction de la silhouette avant du véhicule, et de sa motorisation, laquelle définit la taille du radiateur et/ou du groupe motoventilateur.

Il est connu, pour diminuer les coûts, de développer une plateforme commune de véhicule déclinée en de multiples silhouettes, chacune d'entre elle pouvant accueillir trois ou quatre motorisations différentes.

Pour une même plateforme de véhicule, il est donc nécessaire de concevoir une face avant par silhouette et par motorisation, ce qui conduit à des coûts de développement et des coûts de production très élevés.

Un but de l'invention est de proposer une face avant de coût de fabrication faible, notamment pour des véhicules issus de la même plateforme.

A cet effet, l'invention propose une face avant du type précité, caractérisée en ce que qu'elle comprend une deuxième traverse supérieure distincte et séparée des montants et de la première traverse, la deuxième traverse étant plus courte que la première traverse et possédant des extrémités fixées sur les extrémités supérieures des montants.

Selon d'autres modes de réalisation, l'invention comprend une ou plusieurs des caractéristiques suivantes, prise(s) isolément ou selon toutes les combinaisons techniquement possibles :
- la deuxième traverse est rectiligne ;
- les portions d'extrémité de la première traverse s'étendent obliquement vers l'arrière à partir des montant ;
- la première traverse et la deuxième traverse sont métalliques et reliées par un corps en matière plastique surmoulé sur la première traverse et la deuxième traverse ;
- la première traverse et la deuxième traverse sont reliées aux montants par des moyens de fixation distincts ;
- chacune de la première traverse et de la deuxième traverse est reliée à chaque montant par au moins un organe de fixation ;
- elle comprend un panneau s'étendant transversalement entre les montant, le panneau constituant une buse de canalisation de l'air circulant à travers un radiateur ;
- le panneau est en matière plastique surmoulée sur les montants métalliques ; et
- les montants possèdent des extrémités inférieures, la face avant comprenant une traverse inférieure reliant les extrémités inférieures des montants.

L'invention concerne également un véhicule automobile comprenant une face avant telle que définie ci-dessus fixée à l'avant de la structure du véhicule automobile.

L'invention concerne en outre un procédé de réalisation d'une série de faces avant, chaque face avant étant telle que définie ci-dessus, caractérisé en ce qu'il comprend des étapes de fabrication d'une première face avant et d'une deuxième face avant de formes distinctes, chaque étape de fabrication comprenant les étapes suivantes :
- fourniture d'un ensemble structurel de silhouette comprenant la première traverse supérieure ;
- assemblage sur l'ensemble structurel de silhouette d'un ensemble de support de groupe de refroidissement comprenant la deuxième traverse supérieure et les montants,
l'une parmi la première traverse supérieure et la deuxième traverse supérieure de la première face avant étant de forme et de dimensions identiques à la forme et aux dimensions de celle de la deuxième face avant,
l'autre parmi la première traverse supérieure et la deuxième traverse supérieure de la première face avant étant de forme et de dimensions distinctes de la forme et des dimensions de celle de la deuxième face avant.

L'invention concerne également une série de faces avant pour véhicules automobiles, chaque face avant étant telle que définie ci-dessus, caractérisée en ce que l'une parmi la première traverse supérieure et la deuxième traverse supérieure d'une première face avant de la série est de forme et de dimensions identiques à la forme et aux dimensions de celle d'une deuxième face avant, l'autre parmi la première traverse supérieure et la deuxième traverse supérieure de la première face avant de la série étant de forme et de dimensions distinctes de la forme et des dimensions de celle de la deuxième face avant.

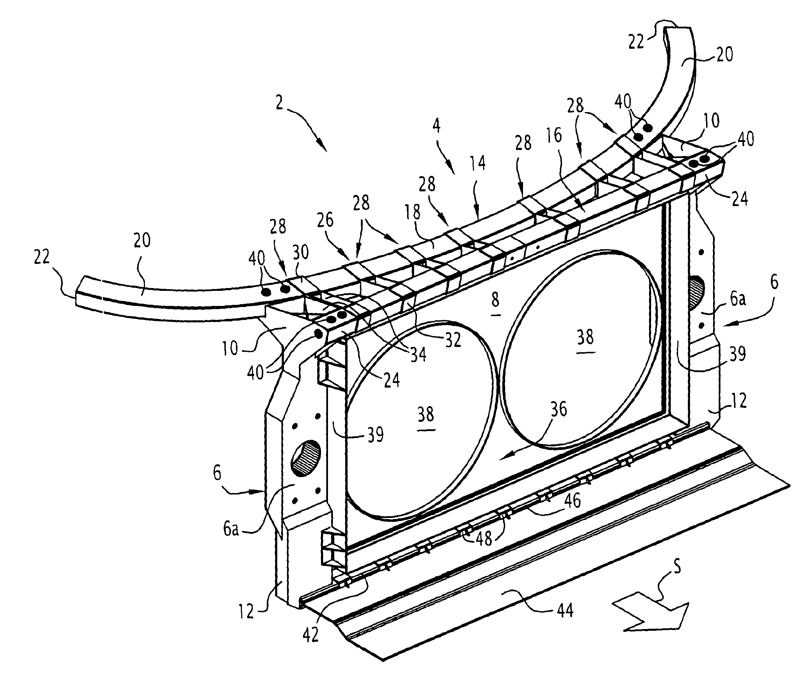

L'invention et ses avantages seront mieux compris à la lecture de la description qui va suivre, donnée uniquement à titre d'exemple, et faite en se référant à la figure 1 annexée représentant une vue schématique en perspective d'une face avant de véhicule automobile conforme à l'invention.

La figure 1 représente un exemple de face avant 2 selon l'invention destinée à être fixée à l'avant de la structure d'un véhicule automobile.

Dans la suite de la description, les termes « inférieur », « supérieur », « horizontal », « vertical » et « latéral » s'étendent par rapport à la direction et au sens de déplacement du véhicule automobile en marche avant, illustré par la flèche S sur la figure 1.

La face avant 2 comprend un ensemble de traverse 4 horizontal et deux montants 6 s'étendant verticalement vers le bas à partir de l'ensemble de traverse 4.

Les montants 6 sont espacés latéralement et définissent entre eux un espace 8 de réception d'un radiateur et/ou d'un groupe motoventilateur (GMV) d'un circuit de refroidissement du moteur du véhicule automobile. Les montants 6 ne sont pas en contact l'un avec l'autre.

Chaque montant 6 présente une extrémité supérieure 10 et une extrémité inférieure 12.

De manière classique, chaque montant 6 présente sensiblement à mi-hauteur une région 6a adaptée pour être fixée sur des extrémités avant de longerons inférieurs (non représentés) de la structure du véhicule automobile.

L'ensemble de traverse 4 comprend une première traverse supérieure 14 et une deuxième traverse supérieure 16 séparées et distinctes, les traverses 14 et 16 étant séparées et distinctes des montants 6. Les traverses 14 et 16 sont espacées et ne sont pas en contact l'une vers l'autre.

Chacune des traverses 14 et 16 relie les extrémités supérieures 10 des montants 4.

La traverse 14 possède une portion centrale 18 s'étendant entre les extrémités supérieures 10 des montants 6, et des portions d'extrémité 20 prolongeant la portion centrale 18 dans des directions opposées. Les portions 20 s'étendent latéralement vers l'extérieur à partir des montants 6. En d'autres termes, les extrémités supérieures 10 des montants 6 sont fixées sur la traverse 14 à distance des extrémités 22 de celle-ci.

Les portions d'extrémité 20 s'étendent obliquement vers l'extérieur et vers l'arrière à partir des montants 6 pour s'adapter à la forme de la carrosserie du véhicule. Les portions d'extrémité 20 se recourbent ici vers l'arrière.

De manière classique, les portions d'extrémité 20 sont destinées à être fixées sur des longerons supérieurs latéraux (non représentés) de la structure du véhicule automobile. La traverse 14 transmet donc les efforts appliqués sur la face avant 2 vers la structure du véhicule automobile.

La traverse 14 est tubulaire et métallique. La traverse 14 est formée par exemple par hydroformage et/ ou cintrage d'un tube.

La traverse 16 est plus courte que la traverse 14, et possède une longueur sensiblement égale à l'écartement entre les montants 6. La traverse 16 présente des extrémités 24 fixées sur les extrémités supérieures 10 des montants 6.

La traverse 16 est métallique et tubulaire. La traverse 16 est rectiligne et de section constante sur toute sa longueur.

Les deux montants 6 et l'ensemble de traverse 4 comprenant deux traverses 14 et 16 distinctes permet la fabrication de différentes faces avant de façon modulaire, et en réduit par conséquent le coût de fabrication.

En effet, il est possible de sélectionner des traverses supérieures présentant des longueurs et/ou des formes adaptées à des faces avant de différents types de véhicule, en tenant compte de la forme de la carrosserie du véhicule, de la structure du véhicule, et des dimensions du radiateur et/ou du GMV, qui dépendent de la motorisation du véhicule.

La forme de la traverse la plus longue, et en particulier celle de ses portions d'extrémité, sont choisies en fonction de la forme de la carrosserie du véhicule.

La traverse la plus courte constitue un renfort de la portion centrale de la traverse la plus longue, et peut être choisie de forme très simple pour réduire le coût de fabrication de la face avant.

La face avant 2 présente une rigidité améliorée du fait que les extrémités supérieures 10 des montants sont reliées par deux traverses 14, 16 en parallèle.

Pour augmenter encore la rigidité, les traverses 14 et 16 sont reliées entre elles par un corps 26 en matière plastique surmoulé sur les traverses 14 et 16.

Le corps 26 comprend des attaches 28 séparées, chaque attache 28 comprenant une bague 30 entourant la traverse 14, une bague 32 entourant la traverse 16, et des voiles longitudinaux 34 reliant les bagues 30 et 32.

Les montants 6 distincts et séparés permettent de modifier facilement leur écartement.

Les montants 6 sont métalliques, et sont par exemple formés par thixoformage.

Pour augmenter la rigidité de la face avant, chaque montant 6 possède un structure en caisson obtenue par la réunion de deux coques séparées par un plan de jonction vertical et transversal.

La face avant 2 comprend un panneau 36 s'étendant verticalement et transversalement entre les montants 6, et reliant les montants 6.

Le panneau 36 possède deux ouvertures 38 pour le passage de l'air à travers le panneau 36. Chaque ouverture 38 est destinée à recevoir une hélice d'un GMV à deux hélices porté par la face avant 2. Le panneau 36 forme ainsi une buse pour guider l'air à travers un radiateur porté par la face avant 2.

Le panneau 36 est placé en arrière du radiateur, de sorte que le GMV travaillera par aspiration de l'air à travers le radiateur. En variante, le panneau 36 est placé en avant du radiateur.

Le panneau 36 est en matière plastique surmoulée sur les montants 6. Les bords latéraux 39 du panneau 36 sont surmoulés à cet effet sur des reliefs d'accrochage prévus sur les montants 6.

Les traverses 14 et 16 sont fixées sur les montants 6 par des moyens de fixations distincts, ce qui permet de changer facilement une des traverses sans modifier les moyens de fixation.

Chacune des traverses 14 et 16 est fixée sur chaque montant 6 par l'intermédiaire de moyens de fixation comprenant un ou plusieurs organes de fixation 40 assurant la liaison entre les deux pièces (par exemple vis ou rivet).

Ces moyens de fixation simples permettent de changer facilement une traverse sans modification du reste de la face avant.

La face avant 2 comprend une traverse inférieure 42 reliant les extrémités inférieures 12 des montants 6 pour rigidifier la face avant 2. La face avant 2 présente alors la forme d'un cadre fermé.

La traverse inférieure 42 est tubulaire métallique et présente une longueur sensiblement égale à l'écartement entre les montants 6.

La traverse inférieure 42 est fixée sur chaque montant 6 à l'aide de moyens de fixation comprenant des organes de fixation assurant la liaison entre les deux pièces (par exemple vis ou rivet).

La face avant 2 possède un spoiler 44 sous la forme d'une plaque en matière plastique s'étendant horizontalement vers l'avant à partir de la traverse inférieure 42. Le spoiler 44 a pour fonction d'améliorer l'écoulement aérodynamique sous le véhicule et à travers le radiateur.

Le spoiler 44 est surmoulé par son bord arrière 46 sur la traverse inférieure 42. Ce bord 46 est muni à cet effet de bagues 48 entourant la traverse inférieure 42.

Pour la fabrication de la face avant 2, on forme d'abord trois sous-ensembles séparés : un premier sous-ensemble en surmoulant le corps 26 sur les traverses 14 et 16, un deuxième sous-ensemble en surmoulant le panneau 36 sur les montant 6, et un troisième sous-ensemble en surmoulant le spoiler 44 sur la traverse 42.

Dans chacun des premier et deuxième sous-ensembles, les pièces métalliques (traverses, montants) ne sont pas en contact ou reliées entre elles avant le surmoulage. Ceci facilite la fabrication en s'affranchissant des tolérances de fabrication, qui sont rattrapées par la matière plastique surmoulée.

Ensuite, on fixe les sous-ensembles entre eux à l'aide d'organes de fixation (par exemple vis ou rivet). Cette fixation est effectuée facilement, et absorbe facilement les tolérances de fabrication.

La fabrication de cette face avant combine par conséquent avantageusement le surmoulage et la fixation à l'aide d'organes de fixation pour l'obtention d'une face avant rigide à faible coût.

En outre, les différentes pièces métalliques peuvent être fabriquées par différentes méthodes plus ou moins coûteuses en fonction de la forme et de la rigidité souhaitée pour chacune de ces pièces.

La traverse 16 et la traverse 42, rectilignes, sont réalisées à faible coût par extrusion. La traverse 14, de forme plus complexe et devant présenter une rigidité importante, est réalisée par exemple par cintrage et/ ou hydroformage. Les montants 6, également de forme complexe, sont réalisés par exemple par thixoformage.

On obtient ainsi à faible coût une face avant 2 dont les différentes pièces sont adaptées aux sollicitations qu'elles doivent subir.

Chaque face avant 2 selon l'invention est ainsi divisée en un ensemble structurel de silhouette comprenant la première traverse 14, de forme et de dimensions adaptées à la silhouette du véhicule, et un ensemble de support de groupe de refroidissement comprenant les montants 6, la deuxième traverse supérieure 16 et la traverse inférieure 42, de dimensions adaptées à la taille du groupe de refroidissement.

Il est ainsi possible de réaliser, à moindre coût, une série de faces avant 2 pour tous les véhicules d'une même plateforme.

A cet effet, une pluralité de premières traverses supérieures 14, de formes distinctes, correspondant aux différentes silhouettes de véhicule souhaitées est réalisée.

De même, une pluralité de deuxièmes traverses supérieures 16 et de traverses inférieures 42 de formes et de dimensions correspondant à différentes tailles de groupes motoventilateur sont réalisées.

Puis, pour chaque véhicule présentant une silhouette et une motorisation données, une face avant 2 est fabriquée comme décrit précédemment, en assemblant une deuxième traverse supérieure 16 de l'ensemble de support sur une première traverse supérieure 14 de l'ensemble de silhouette par surmoulage des corps 26 en matière plastique sur les traverses 14 et 16. Puis, les montants 6 sont vissés sur la première traverse supérieure 14 et sur la deuxième traverse supérieure 16.

Une deuxième face avant 2 de la série de faces avant est fabriquée de la même manière. En fonction de la silhouette et de la motorisation du véhicule sur lequel la deuxième face avant 2 doit être assemblée, l'une parmi la première traverse supérieure 14 et la deuxième traverse supérieure 16 de la première face avant 2 est de forme et de dimensions identiques à la forme et aux dimensions de celle de la deuxième face avant 2.

L'autre parmi la première traverse supérieure 14 et la deuxième traverse supérieure 16 de la première face avant 2 est de forme et de dimensions distinctes de la forme et des dimensions de celle de la deuxième face avant.

Ainsi, pour trois silhouettes et trois motorisations, il n'est pas nécessaire de développer neuf faces avant complètes correspondant aux différents véhicules devant être réalisés. Dans l'invention qui vient d'être décrite, trois ensembles structurels de support correspondant à trois longueurs de la deuxième traverse supérieure 16 sont développés. Trois ensembles structurels de silhouette correspondant à trois formes distinctes de la première traverse supérieure 14 sont également développés, en prévoyant des zones d'assemblage communes entre l'ensemble de silhouette et l'ensemble de refroidissement.

Pour faciliter le montage, les ensembles sont assemblés par vissage et/ou par surmoulage local.

En outre, si une nouvelle motorisation, ou si une nouvelle silhouette est introduite sur la même plateforme de véhicule, l'un parmi l'ensemble de silhouette et l'ensemble structurel de support est modifié, alors que l'autre n'est pas modifié.

En outre, les ensembles de support de groupe de refroidissement ainsi développés peuvent être utilisés sur d'autres véhicules d'une autre plateforme.

## Revendications

1. Face avant pour véhicule automobile destinée à supporter un radiateur et/ou un groupe motoventilateur, du type comprenant deux montants (6) possédant chacun une extrémité supérieure (10) et définissant entre eux un espace (8) de réception d'un radiateur et/ou d'un groupe motoventilateur, et une première traverse supérieure (14) distincte et séparée des montants (6), la première traverse (14) reliant les extrémités supérieures (10) des montants (6) et possédant des portions d'extrémité (20) s'étendant latéralement vers l'extérieur à partir des montants (6),
**caractérisée en ce que** les deux montants (6) sont distincts et séparés, et **en ce que** la face avant comprend une deuxième traverse supérieure (16) distincte et séparée des montants (6) et de la première traverse (14), la deuxième traverse (16) étant plus courte que la première traverse (14) et possédant des extrémités (24) fixées sur les extrémités supérieures (10) des montants (6).

2. Face avant selon la revendication 1, **caractérisée en ce que** la deuxième traverse (16) est rectiligne.

3. Face avant selon l'une quelconque des revendications 1 et 2, **caractérisée en ce que** les portions d'extrémité (20) de la première traverse (14) s'étendent obliquement vers l'arrière à partir des montant (6).

4. Face avant selon l'une quelconque des revendications précédentes, **caractérisée en ce que** la première traverse (14) et la deuxième traverse (16) sont métalliques et reliées par un corps (26) en matière plastique surmoulé sur la première traverse (14) et la deuxième traverse (16).

5. Face avant selon l'une quelconque des revendications précédentes, **caractérisée en ce que** la première traverse (14) et la deuxième traverse (16) sont reliées aux montants (6) par des moyens de fixation distincts.

6. Face avant selon l'une quelconque des revendications précédentes, **caractérisée en ce que** chacune de la première traverse (14) et de la deuxième traverse (16) est reliée à chaque montant (6) par au moins un organe de fixation (40).

7. Face avant selon l'une quelconque des revendications précédentes, **caractérisée en ce qu'**elle comprend un panneau (36) s'étendant transversalement entre les montants (6), le panneau (36) constituant une buse de canalisation de l'air circulant à travers un radiateur.

8. Face avant selon la revendication 7, **caractérisée en ce que** le panneau (36) est en matière plastique surmoulée sur les montants (6) métalliques.

9. Face avant selon l'une quelconque des revendications précédentes, **caractérisée en ce que** les montants (6) possède des extrémités inférieure (12), la face avant comprenant une traverse inférieure (42) reliant les extrémités inférieures (12) des montants (6).

10. Véhicule automobile comprenant une face avant selon l'une quelconque des revendications précédentes, fixée à l'avant de la structure du véhicule.

11. Procédé de réalisation d'une série de faces avant pour véhicule automobile, chaque face avant étant selon l'une quelconque des revendications 1 à 9, **caractérisé en ce qu'**il comprend des étapes de fabrication d'une première face avant et d'une deuxième face avant de formes distinctes, chaque étape de fabrication comprenant les étapes suivantes :
- fourniture d'un ensemble structurel de silhouette comprenant la première traverse supérieure (14) ;
- assemblage sur l'ensemble structurel de silhouette d'un ensemble de support de groupe de refroidissement comprenant la deuxième traverse supérieure (16) et les montants (6),
l'une parmi la première traverse supérieure (14) et la deuxième traverse supérieure (16) de la première face avant étant de forme et de dimensions identiques à la forme et aux dimensions de celle de la deuxième face avant,
l'autre parmi la première traverse supérieure (14) et la deuxième traverse supérieure (16) de la première face avant étant de forme et de dimensions distinctes de la forme et des dimensions de celle de la deuxième face avant.

12. Série de faces avant pour chaque véhicule automobile, chaque face avant étant selon l'une quelconque des revendications 1 à 9, **caractérisée en ce que** l'une parmi la première traverse supérieure (14) et la deuxième traverse supérieure (16) d'une première face avant de la série est de forme et de dimensions identiques à la forme et aux dimensions de celle d'une deuxième face avant, l'autre parmi la première traverse supérieure (14) et la deuxième traverse supérieure (16) de la première face avant de la série étant de forme et de dimensions distinctes de la forme et des dimensions de celle de la deuxième face avant.
